(19) **Europäisches Patentamt / European Patent Office / Office européen des brevets**

(11) **EP 2 228 957 A1**

(12) **EUROPEAN PATENT APPLICATION**

(43) Date of publication:
**15.09.2010 Bulletin 2010/37**

(51) Int Cl.:
**H04L 25/03** (2006.01)   **H04B 7/26** (2006.01)

(21) Application number: **09003667.4**

(22) Date of filing: **13.03.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Vodafone Holding GmbH**
**40213 Düsseldorf (DE)**

(72) Inventors:
• **Grieger, Michael**
  **30916 Isernhagen (DE)**
• **Marsch, Patrick**
  **01099 Dresden (DE)**

(74) Representative: **Taruttis, Tilman**
**Bosch Jehle**
**Patentanwaltsgesellschaft mbH**
**Flüggenstraße 13**
**80639 München (DE)**

(54) **Base station cooperation scheme**

(57)   In a cellular mobile communication system comprising mobile terminals and base stations message transmission in one cell may interfere with a message transmission in another cell of the same communication system. This inter-cell interference can be reduced by exchanging information about received messages between base stations.

Fig. 1

EP 2 228 957 A1

## Description

The invention relates to a method and a corresponding apparatus for decoding messages in a cellular communication system. In particular, the invention relates to cellular communication systems where the locally fixed receivers, i.e. so-called base stations or node-Bs, are communicatively coupled via a network, i.e. a so-called backhaul link, and exchange messages for improving the decoding of messages received from mobile terminals.

In conventional cellular mobile communication systems, in each cell a plurality of mobile terminals is assigned to a base station. Each mobile terminal receives and transmits messages with its assigned base station. Due to the number of terminals in each cell and the limited frequency resources available, it is impossible to assign a communication resource (i.e. a frequency, time slot and/or code) to a terminal, such that the resource is unique for that terminal in the entire communication system. Instead, resources are usually assigned to and used by different mobile terminals in different cells of the system. As a consequence, the signals of a terminal in a cell may interfere with signals transmitted by another terminal using the same resource in a neighbouring cell. The signals received at the base stations accordingly may be distorted by the signals transmitted in the adjacent cell since they use the same resource.

In this way, today's cellular mobile communications systems are limited by the aforedescribed inter-cell interference. Instead of treating the interference caused by signal propagation across cell borders as noise, the base stations may cooperate in order to mitigate interference. Recent publications have demonstrated that employing such Base Station Cooperation (BSC) techniques may increase the spectral efficiency of a cellular system.

In base station cooperation techniques, at least two base stations are communicatively coupled and cooperate in order to improve the performance of the cellular communications system. The base stations exchange information using said coupling, such that a base station may take advantage of an operation of another base station. In one embodiment, a first base station may decode a received signal and then pass information about said message or said message itself across the coupling to the at least one other base station, which takes advantage of said message when decoding another message.

In one embodiment, the messages exchanged between base stations provide information enabling a base station to reduce the interference of other signals when decoding a signal received from an assigned mobile terminal. That is, when a first base station decodes a received signal of an assigned first mobile station, said first base station may forward the decoded message or information about the message to another, second base station via the backhaul link. The second base station then processes the information received from the first base station in order to improve its operation, for example in order to cancel out or at least reduce interference in the second signal caused by the first signal.

For some applications, signals received from mobile terminals must be processed under strong latency constraints, for example when processing speech data. Accordingly, a timely processing of the messages exchanged between the base stations is required, which in turn requires a fast coupling between the base stations, such that the messages in the end arrive in time at their individual destination. The data rate of the backhaul link between the at least two base stations correspondingly must enable a fast message exchange between the base stations to allow a fast processing of the messages received from mobile terminals. Vice versa, the available data rate of the backhaul link should be used most efficient in order to allow said timely message exchange and processing.

A strategy for improving conventional systems comprises a method according to the independent method claim and a corresponding apparatus claim.

In the following, the proposed method and cellular communication system are described in more detail with reference to the accompanying figures.

Brief description of the figures

Fig. 1 depicts a block diagram of a communication system comprising two base stations and two mobile terminals;

Fig. 2 depicts a plot illustrating the achievable maximum sum rate depending on the available transfer rate of the backhaul link, and

Fig.3 depicts a plot illustrating the achievable sum rate depending on the interference power gain.

Detailed description

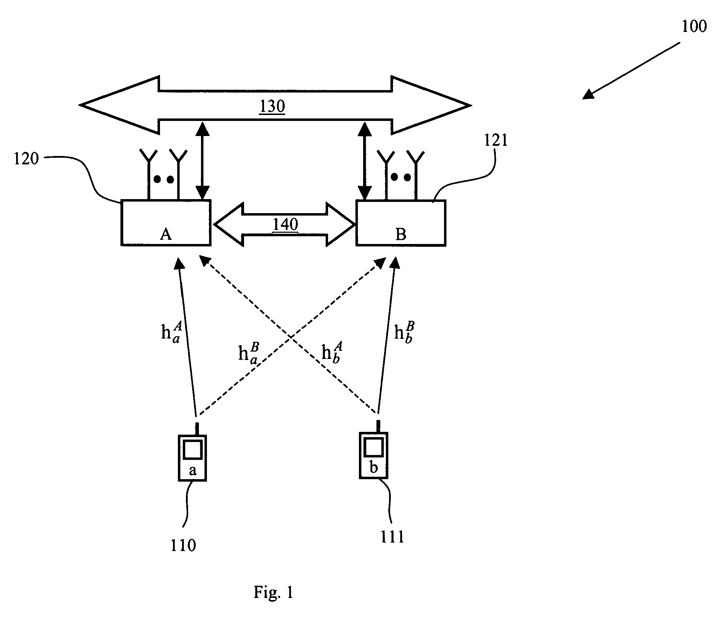

Figure 1 depicts a block diagram of a cellular communications system 100 comprising a first mobile terminal 110, a second mobile terminal 111 and a first and a second base station 120, 121.

In the following, the term mobile terminal denotes any device capable of exchanging messages with a base station. Accordingly, a mobile terminal may be a cell phone or a so-called personal digital assistant (PDA) or any computer means, which may or may not be mobile, comprising means for exchanging messages with a base station. Insofar, the term mobile terminal shall denote any of these or an equivalent device capable of exchanging messages with a base station.

Similarly, the term base station shall denote any locally fixed transceiver station, which is communicatively coupled to a network 130 for forwarding or receiving messages to be transferred to or from a mobile terminal. In this way, a base station forms the gateway between the wireless transmitting mobile terminals and the network. Accordingly, the term base station shall not only denote a base station of a GSM cell phone system, but also a locally fixed node-B of an UMTS system or any other gateway capable of exchanging messages with mobile terminals on one side and a network on the other side. In the drawing, base stations 120, 121 are coupled to network 130. Each of the base stations 120, 121 may forward messages received from an assigned mobile terminal via network 130 to a destination. Base stations 120 and 121 are furthermore communicatively coupled by backhaul link 140, which enables a message exchange between the coupled base stations. As backhaul link 140 forms a communication link between the base stations parallel to network connection 130, said backhaul link may be implemented by network 130.

In the system, mobile terminal 110, denoted as mobile terminal a, is assigned to base station 120, which is denoted A. That is mobile terminal 110 in this embodiment exchanges payload messages with base station 120 only. This connection between mobile station 120, i.e. mobile station "a", and base station 120, i.e. base station "A", is figuratively illustrated by the arrow from mobile terminal a to base station A.

Similarly mobile terminal 111, denoted as b, is assigned to base station 121, i.e. base station B, for exchanging payload messages; the arrow between mobile terminal 111 and base station 121 illustrates this assignment.

Although the figure depicts only one mobile terminal assigned to each one of the base stations, it is apparent that there may be a plurality of mobile stations assigned to base station 120 and another plurality of mobile terminals assigned to base station 121. Furthermore, it is apparent that there may be a plurality of other base stations and a corresponding plurality of mobile terminals assigned to each of these, such that these form a cellular communication system. Without any restriction to its general applicability, the topology illustrated in Fig. 1 depicts only two mobile terminals 110, 111 each assigned to one base station 120, 121 for simplifying the following description.

Subsequently it is assumed that backhaul link 140 allows an error-free transmission of messages between the base stations and is restricted in terms of capacity, i.e. backhaul link 140 has a limited data transfer rate. Furthermore, it is assumed that all communicating entities (110, 111, 120, 121) are perfectly synchronized in time and frequency.

When considering the transmission of messages from mobile terminal a, i.e. 110, to base station 120, i.e. A, the transmission link as denoted by above mentioned arrow is characterized by $h_a^A$, which is the transmission function of the upstream channel from mobile terminal a to base station A. Similarly, the transmission link between mobile terminal b and base station B is described by its corresponding transmission function $h_b^B$. The transmission of messages from the mobile terminals to the base stations is disturbed by additive Gaussian noise being independently and identically distributed (i.i.d.), so as to model the effects of thermal noise, radio frequency impairments or outer system interference. The channels are considered to be narrowband and with a flat frequency spectrum. In one embodiment, the channels can be considered to be implemented by a subcarrier of an orthogonal frequency division multiple access (OFDMA) system.

The transmission of a single symbol from a mobile terminal to a base station in a time-discrete notation is

$$y = Hx + n \quad , \quad (1)$$

wherein $y \in Y = C^{N_{BS}}$ is the received symbol, $x \in C^K$ is the transmitted symbol and $H \in C^{[N_{BS} \times K]}$ is the channel matrix of elements h representing the gains from a transmit antenna to a receive antenna. In one embodiment the noise vector $n \in C^{N_{BS}}$ can be a realization of a zero-mean circularly symmetric complex Gaussian (ZMCSCG) random process

$$n \sim NC\left(0_{N_{BS}}, \Phi_{nn}\right) = NC\left(0_{N_{BS}}, \sigma_n^2 I_K\right),$$ where $\sigma_n^2$ is the noise variance. However the proposed base station cooperation scheme can be used in any noise or interference scenario.

The mobile terminals are non-cooperative. That is, they receive and transmit messages to their assigned base station without taking into account any operation of the other mobile terminal. That is, they transfer independent data streams to and from their individually assigned base station.

Considering now that mobile terminal a, i.e. 110, and mobile terminal b, i.e. 111, may each transmit a message

$M_a$, $M_b$ at the same time using the same carrier frequency, and wherein the terminals are assigned to base stations of adjacent cells, then the signal $X_a$ transmitted by mobile terminal a will not only be received at base station A as received signal $Y_A$, i.e. at the base station to which the transmitting mobile terminal is assigned, but also at base station B, where it superimposes on the message $X_b$ sent from mobile terminal b to base station B. Base station B accordingly receives signal $Y_B$, which differs from signal $X_b$ as sent by mobile terminal b. Similarly, the signal $X_b$ sent from mobile terminal b to base station B will be also received at base station A, where it superimposes signal $X_a$ sent from mobile terminal a. In this way both of the base stations A and B operating on the same carrier frequency receive signals superimposed by another signal, and wherein the signals superimpose each other in addition to other noise. This interfering transmission from mobile terminal a to base station B and similarly from mobile terminal b to base station B is illustrated by the corresponding dashed arrows from a to B and b to A respectively.

Considering the set of mobile terminals as $K = \{a, b\}$ and the set of base stations as $M = \{A, B\}$, the transmission between the mobile terminals and the base stations can be defined as

$$ H = \begin{bmatrix} \mathrm{h}_a^A & \mathrm{h}_b^A \\ \mathrm{h}_a^B & \mathrm{h}_b^B \end{bmatrix} = \begin{bmatrix} \mathrm{h}_a & \mathrm{h}_b \end{bmatrix} = \begin{bmatrix} \mathrm{H}_A \\ \mathrm{H}_B \end{bmatrix} \quad (2) $$

In the following it is assumed that all transmission functions of (2) can be estimated, wherein the performance of the proposed method increases with increasing quality of channel estimation, particularly with increasing quality of channel vectors $\mathrm{h}_a^B$ and $\mathrm{h}_b^A$.

A simultaneous transmission of messages $M_a$ and $M_b$ respectively from mobile terminals a and b on the same carrier frequency in this way has impact on the reception and subsequent processing of the transmitted signals, as either signal is received at either base station thus distorting each other.

The backhaul link between base station A and base station B allows to send information to base station B, such that base station B can take advantage of information gained at base station A from processing received signal $Y_A$ when decoding signal $Y_B$. The process of decoding signal $Y_B$ in base station B is improved in that the signal sent from mobile terminal a is used to reduce the interference caused by signal $X_a$ on signal $Y_B$, thus reducing the distortion of said received signal. In particular this is accomplished as follows.

At the time when both mobile terminals, i.e. a and b, transmit their messages, the mobile terminals generate signals $X_a$ and $X_b$ respectively, wherein the signals reflect messages $M_a$ and $M_b$ respectively. That is, a message is mapped to symbols according to a coding scheme, and these coded symbols are transmitted, which forms signals $X_a$ and $X_b$. Both terminals transmit their signal at the same time, or at least the transmissions overlap in time, and on the same carrier frequency. The signals thus interfere at each receiving base station. This interference of a message transmission in a first cell caused by a simultaneous transmission in another cell of the same cellular communication system is called inter-cell interference.

Upon reception of signal $Y_A$, that is at base station A, the base station immediately decodes received signal $Y_A$. It is assumed that base station A is capable of successfully decoding signal $Y_A$ into message $M_A$, such that message $M_A$ as decoded from signal $Y_A$ is identical to the original message $M_a$ in mobile terminal a. The system may provide means for ensuring the successful decoding. In one embodiment the system may provide a forward error correction scheme (FEC) allowing the successful decoding. Various conventional schemes are known for transmitting a message across a distorting channel and enabling a correct decoding of a distorted message.

Besides forwarding the decoded message $M_a$ to any further processing block, base station A, i.e. base station 120, re-encodes the message using the same encoding scheme as mobile terminal a. That is base station A encodes the just decoded message to produce a signal $X_A$. Since base station A uses the same encoding scheme for encoding message $M_A$, the signal $X_A$ is identical to signal $X_a$, i.e. the signal produced base station A is identical to the signal produced in mobile terminal a.

Said signal $X_A$ is passed via backhaul link 140 to base station B for further processing. That is at base station B signal $X_A$ is used to determine the interference $X_A \mathrm{h}_a^B$ caused by said signal when transmitted by mobile terminal a. Base station B is capable of determining said interference since the transmission function $\mathrm{h}_a^B$ of the channel between mobile terminal a and base station B is known from channel estimation.

Base station B then subtracts the estimated interference $X_A \mathrm{h}_a^B$ from received signal $Y_B$, thus reducing the interference caused by signal $X_A$. In this way received signal $Y_B$ is modified to $Y'_B$, which is

$$\begin{aligned} Y'_B &= \underbrace{h_b^B \, X_b + h_a^B \, X_a + \mathrm{n}}_{Y_B} - h_a^B \, X_A \\ &= h_b^B \, X_b + \mathrm{n} \end{aligned} \tag{3}$$

That is, if the estimation of the channel from mobile terminal a to base station B matches, the interference in signal $Y_B$ is eliminated or - depending on the estimation of the channel - at least reduced, thus improving the signal received at base station B significantly.

With regard to the data rate achievable in the connections between mobile terminal a and base station A and between mobile terminal b and base station B, it is noted that providing information from base station A to B will not have a positive affect on the data rate between terminal a and base station A. However, the rate of the channel between terminal b and base station B can be improved, since due to the reduced interference an optimized encoding scheme suitable for higher signal to noise and interference ratio (SINR) may be applied on this channel. The achievable data rate for transmitting data from mobile terminal b is given as

$$\begin{aligned} r_b\left(r_{Bh}\right) &= \max_{p(X_b)} I(Y'_B ; X_b) \\ &= \log_2(1 + P_{\max} \left(h_b^B\right)^H \left(\Phi_{nn}\right)^{-1}) h_b^B \end{aligned} \tag{4}$$

wherein function $I()$ is the mutual information of $Y'_B$ and $X_b$, $P_{\max}$ denotes that mobile terminal b transmits with full power, p(Xb) is the probability density function of Xb (Gaussian in the optimal case), and $\Phi_{nn}$ denotes the covariance of the thermal noise of base station B.

Taking into account that the data transfer rate available on backhaul link 140 may be limited, the information transmitted via the backhaul link can be in compressed form, i.e. as compressed signal $\hat{X}_A$, wherein the compression method may be lossy.

Accordingly, the compressed version $\hat{X}_A$ differs from the original signal which herein is modeled as an additional compression noise $q$. Consequently received and modified signal $Y'_B$ is

$$\begin{aligned} Y'_B &= h_b^B \, X_b + h_a^B \, X_a + \mathrm{n} - h_a^B \left(X_a - q\right) \\ &= h_b^B \, X_b + \mathrm{n} + h_a^B \, q \end{aligned} \tag{5}$$

The achievable data rate in the channel from mobile terminal b to base station B accordingly is

$$\begin{aligned} r_b\left(r_{Bh}\right) &= \max_{p(X_b)} I(Y'_B ; X_b) \\ &= \log_2\left(1 + P_{\max} \left(h_b^B\right)^H \left(\Phi_{nn} + h_a^B \, \sigma_q^2 \left(h_a^B\right)^H\right)^{-1} h_b^B\right) \end{aligned} \tag{6}$$

In this way, the proposed method for the cooperation of base stations relates to the uplink transmission of messages only as it improves the decoding of a message sent from a mobile terminal to a base station. Without loss of generality, mobile terminals a and b operate as transmitting terminals and base stations operate as receiver stations. The proposed cooperation scheme for base stations accordingly relates to a method for decoding a message in a cellular communication system, wherein a first message is transmitted by a first terminal to a first receiver station and wherein a second message is transmitted by a second terminal in the same frequency, time and/or code resource to a second receiver station. The method comprises receiving and decoding the first message in the first receiver station, re-encoding the decoded first message, transmitting the re-encoded first message to the second receiver station, receiving the second message in the second receiver, estimating the interference on the second message caused by the first message in the second receiver station and decoding the second message under consideration of the estimated interference. Optionally the re-encoded first message can be transmitted to the second receiver station in compressed form, which can be easily transmitted via the backhaul link. Particularly the compression of the re-encoded first message may produce a format suitable for a transmission via the backhaul link.

The performance of this base station cooperation scheme depends on the channel conditions, i.e. it depends on the conditions of a channel between mobile terminals a and b and their assigned base stations A and B respectively as well as on the conditions of the channels between mobile terminal a and base station B and between mobile terminal b and base station A.

In order to not unnecessarily complicate the channel model as considered in the following, a power control is employed for controlling the power gain of each mobile terminal in the channel to its assigned base station to a fixed value $\lambda$ normalized to 1, i.e. $\lambda_a^A = \lambda_b^B = 1$. Furthermore, rows and columns of a channel matrix can be multiplied by a common factor without affecting the mutual information. Then a normalized channel model is given as

$$\mathrm{H}_{norm} = \begin{bmatrix} 1 & \sqrt{\lambda_b^A} \\ \sqrt{\lambda_a^B} & e^{j\phi_{AB}} \end{bmatrix} \qquad (7)$$

wherein $\phi_{AB} = \phi_{Bb} + \phi_{Aa} - \phi_{Ba} - \phi_{Ab}$ is the orthogonality parameter.

In a first scenario, a Z-channel situation is considered. In said Z-channel scenario the transmission channel from one mobile terminal to its assigned base station, i.e. the uplink, is **characterized in that** it is nearly undistorted, such that any interference from another mobile terminal is marginal and can be neglected. So without loss of generality we assume in this model that mobile station a does not interfere with, i.e. $\lambda_a^B = 0$.

In one embodiment a Z-channel situation as described may occur when mobile terminal a is located in the vicinity of its assigned base station A, while mobile terminal b is located close to the edge of its cell and adjacent to the cell around base station A. Since mobile terminal a is located close to its base station its transmit power can be made small such that its transmit signal is barely received at base station B, whereas due to the longer distance between mobile terminal b and its assigned base station B high transmit power is required for an appropriate signal reception at base station B which is connected with strong interference at base station A.

In this case a further simplification of the transmission model is allowed as the scalar product between $h_a$ and $h_b$ is $\left(\lambda_b^A\right)^{1/2}$. Consequently the achievable data rates do not depend on the orthogonality parameter $\phi_{AB}$ and the model of the considered Z-channel scenario is

$$\mathrm{H}_Z = \begin{bmatrix} 1 & \sqrt{\lambda_b^A} \\ 0 & 1 \end{bmatrix} \qquad (8)$$

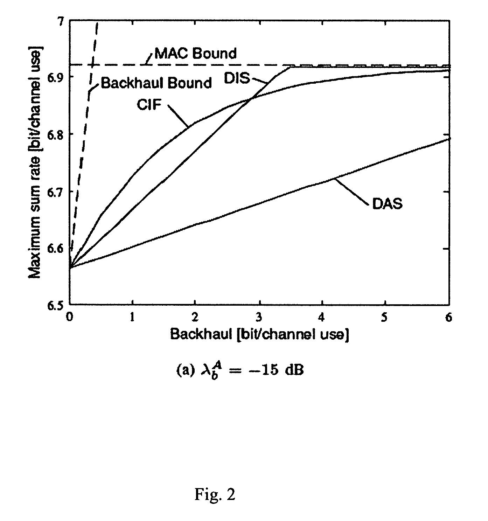

Figure 2 illustrates the maximum sum rate of different schemes as a function of the available transfer rate and in a Z-channel scenario with an interference of $\lambda_b^A = -15dB$. In this figure two bounds on the maximum sum rate are depicted as well. The *MAC bound* limits the maximum sum rate for the case of unlimited cooperation of the base stations:

$$R_{sum}\left(R_{Bh} \to \infty\right) = \log_2 \left| 1 + P_{max} \sum_{k \in K} \mathrm{h}_k^H \, \Phi_{nn}^{-1} \, \mathrm{h}_k \right| \qquad (9),$$

wherein $R_{Bh}$ denotes the data transfer rate of the backhaul link.

Another limit, which is the *backhaul bound*, follows from the max flow min-cut theorem, which states, that the maximum sum rate never can exceed the maximum sum rate achievable without any cooperation plus the invested backhaul. In this optimistic case, every bit exchanged between the base stations increases the information that can be transmitted over the air interface by one bit as well, that is

$$R_{max}(R_{Bh}) \le R_{max}(0) + R_{Bh} \quad (10).$$

The point-wise minimum of both bounds is the *cut-set bound*.

In Z-channel scenarios signals can be separated very efficiently by first decoding the non-interfered user and then using the decoded message to reduce its interference before the other message is decoded. As described above said use of the decoded message comprises that the message is re-encoded in the decoding base station into a signal, wherein the signal is then send - optionally in compressed form - to the base station decoding the other message.

The plots in fig. 2 show that this method of base station cooperation, which can be abbreviated as compressed interference forwarding (CIF), is more effective in the low backhaul and weak interference regime when compared to a conventional so-called DAS system or a so-called DIS system. In a Distributed Antenna System (DAS) all transmitted messages are decoded jointly in a central processing entity, wherein a base station forwards a received signal - in compressed form - to the central processing entity. The base stations accordingly operate as remote radio heads and the central processing entity is capable of considering interfering signals when decoding a particular message. In contrast to that distributed interference subtraction (DIS) systems operate on the exchange of decoded messages, i.e. once a message is decoded in a first base station it is transferred via the backhaul link to another base station, which in turn may use that decoded message when decoding a message interfering with the received decoded message.

The excellent performance of the here proposed method in this regime follows from the distortion rate function for Gaussian signals, which linearly increases in the interference power gain and increases convex as well as decreasing in the backhaul rate.

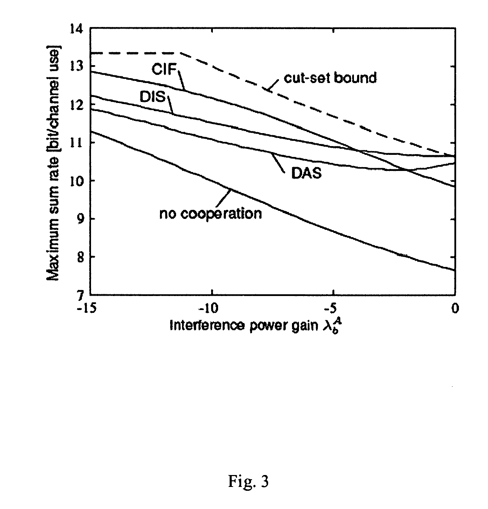

Figure 3 depicts the maximum sum rate for a range of Z-channels with high signal to noise ratio (SNR) of 20 *dB* and different interference power gains for a backhaul transfer rate of $R_{Bh}$ = 3 *bit/channel use*. These plots illustrate that the proposed base station cooperation scheme achieves noteworthy gains in cases of a low backhaul data rate and in a low interference regime in that the inter-cell interference can be reduced significantly.

The proposed cooperation scheme for the base stations requires the base stations to be adapted and configured for performing the described method steps. Hence, the cooperation scheme can be performed by any cellular communication system comprising at least two receiver stations. In the system a first receiver station is configured and adapted for receiving and decoding a first message received from a first terminal, and for re-encoding the decoded first message into a first signal. The first receiver station is communicatively coupled to a second receiver station for transmitting the re-encoded first message to the second receiver station. The second receiver station is configured and adapted for receiving a second message from a second terminal, estimating the interference on the second message caused by the first message sent by the first terminal and decoding the second message under consideration of the estimated interference.

**Claims**

1. A method for decoding a message in a cellular communication system (100), wherein a first message is transmitted by a first terminal (110) to a first receiver station (120) and wherein a second message is transmitted by a second terminal (111) to a second receiver station (121), comprising the steps of:

   - receiving and decoding the first message in the first receiver station (120);
   - re-encoding the decoded first message;
   - transmitting the re-encoded first message to the second receiver station (121);
   - receiving the second message in the second receiver (121);
   - estimating the interference on the second message caused by the first message in the second receiver station (121) and decoding the second message under consideration of the estimated interference.

2. The method of claim 1, wherein the re-encoded first message is transmitted to the second receiver station (121) in compressed form.

3. The method of any preceding claim, wherein the cellular communication system (100) is an orthogonal frequency division multiple access system.

4. The method of any preceding claim, wherein at least the first message is transmitted using a forward error correction scheme.

5. The method of any preceding claim, wherein in the step of re-encoding the first message the first receiver station (120) deploys the same encoding scheme as the first terminal.

6. The method of any preceding claim, wherein the transmission of the first message is significantly less distorted than the transmission of the second message.

7. The method according to any previous claim, further comprising the step of estimating the channel characteristics of a transmission from the first terminal (110) to the second receiver station (121).

8. The method according to claim 7, wherein the step of estimating the interference on the second message is based on the estimated channel characteristics of a channel between the first terminal (110) and the second receiver station (121).

9. The method of any preceding claim, wherein the re-encoded message is transmitted via a cable connection from the first receiver station (120) to the second receiver station (121).

10. The method of any preceding claim, wherein the first (110) or second terminal (111) are mobile terminals and the first and second receiver stations (120, 121) are base stations in a cell phone system.

11. A cellular communication system (100) comprising at least two receiver stations (120, 121), wherein a first receiver station (120) is configured and adapted for receiving and decoding a first message received from a first terminal (110), and for re-encoding the decoded first message, and wherein the first receiver station (120) is communicatively coupled to a second receiver station (121) for transmitting the re-encoded first message to the second receiver station (121), and wherein the second receiver station (121) is configured and adapted for receiving a second message from a second terminal (111), estimating the interference on the second message caused by the first message and decoding the second message under consideration of the estimated interference.

12. The cellular communication system (100) of claim 11, wherein the first and second receiver stations (120, 121) are configured and adapted to transfer the re-encoded first message in compressed form.

13. The cellular communication system (100) of any preceding claim 11 - 12, wherein the cellular communication system (100) is an orthogonal frequency division multiple access system.

14. The communication system (100) of any preceding claim 11 - 13, wherein the at least two receiver stations (120, 121) are base stations and the first and second terminals (110, 111) are mobile terminals.

Fig. 1

EP 2 228 957 A1

(a) $\lambda_b^A = -15$ dB

Fig. 2

Fig. 3

Europäisches
Patentamt

European
Patent Office

Office européen
des brevets

**EUROPEAN SEARCH REPORT**

Application Number

EP 09 00 3667

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | EP 1 906 559 A (VODAFONE HOLDING GMBH [DE]) 2 April 2008 (2008-04-02)<br><br>* paragraphs [0006], [0010] - [0013], [0018], [0031], [0032], [0040] - [0050] *<br>* figures 3,4 * | 1,3, 9-11,13, 14<br>2,4-8,12 | INV.<br>H04L25/03<br>H04B7/26 |
| X<br><br>A | EP 0 766 416 A (AT & T CORP [US]) 2 April 1997 (1997-04-02)<br><br>* abstract *<br>* column 8, lines 15-47 *<br>* figures 1,4-6 *<br>* claim 1 * | 1,2,5, 9-12,14<br>3,4,6-8, 13 | |
| X<br><br>A | WO 98/57452 A (MOTOROLA INC [US]) 17 December 1998 (1998-12-17)<br><br>* page 1, lines 14-30 *<br>* page 3, line 32 - page 4, line 8 *<br>* page 5, line 10 - page 6, line 25 *<br>* page 7, lines 1-5 *<br>* page 9, lines 18-25 * | 1,11<br><br>2-10, 12-14 | TECHNICAL FIELDS SEARCHED (IPC)<br><br>H04L<br>H04B |
| X<br><br>A | EP 1 261 141 A (NTT DOCOMO INC [JP]) 27 November 2002 (2002-11-27)<br><br>* paragraphs [0038] - [0061], [0063] *<br>* figures 4,5 * | 1,11<br><br>2-10, 12-14 | |

-/--

The present search report has been drawn up for all claims

| Place of search | Date of completion of the search | Examiner |
|---|---|---|
| Munich | 7 October 2009 | Ferrari, Jeannot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

**Europäisches Patentamt**
**European Patent Office**
**Office européen des brevets**

## EUROPEAN SEARCH REPORT

Application Number

EP 09 00 3667

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 97/02666 A (NOKIA TELECOMMUNICATIONS OY [FI]; KESKITALO ILKKA [FI]; KIISKI MATTI []) 23 January 1997 (1997-01-23)<br>* page 10, line 9 - page 11, line 31 *<br>* figure 5 *<br>----- | 1-14 | |

**TECHNICAL FIELDS SEARCHED (IPC)**

The present search report has been drawn up for all claims

| Place of search | Date of completion of the search | Examiner |
|---|---|---|
| Munich | 7 October 2009 | Ferrari, Jeannot |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 228 957 A1**

**ANNEX TO THE EUROPEAN SEARCH REPORT
ON EUROPEAN PATENT APPLICATION NO.**

EP 09 00 3667

07-10-2009

| Patent document cited in search report | | Publication date | Patent family member(s) | | Publication date |
|---|---|---|---|---|---|
| EP 1906559 | A | 02-04-2008 | NONE | | |
| EP 0766416 | A | 02-04-1997 | CA | 2181398 A1 | 30-03-1997 |
| | | | DE | 69632986 D1 | 02-09-2004 |
| | | | DE | 69632986 T2 | 28-07-2005 |
| | | | ES | 2225859 T3 | 16-03-2005 |
| | | | JP | 3066326 B2 | 17-07-2000 |
| | | | JP | 9130326 A | 16-05-1997 |
| | | | US | 5768254 A | 16-06-1998 |
| WO 9857452 | A | 17-12-1998 | EP | 0988724 A1 | 29-03-2000 |
| | | | JP | 2002506583 T | 26-02-2002 |
| | | | US | 5894500 A | 13-04-1999 |
| EP 1261141 | A | 27-11-2002 | CN | 1388661 A | 01-01-2003 |
| | | | DE | 60213158 T2 | 14-06-2007 |
| | | | JP | 3875042 B2 | 31-01-2007 |
| | | | JP | 2002353824 A | 06-12-2002 |
| | | | US | 2002177426 A1 | 28-11-2002 |
| WO 9702666 | A | 23-01-1997 | AT | 227480 T | 15-11-2002 |
| | | | AU | 709418 B2 | 26-08-1999 |
| | | | AU | 6227496 A | 05-02-1997 |
| | | | CN | 1159261 A | 10-09-1997 |
| | | | DE | 69624662 D1 | 12-12-2002 |
| | | | DE | 69624662 T2 | 10-07-2003 |
| | | | EP | 0779001 A1 | 18-06-1997 |
| | | | ES | 2187657 T3 | 16-06-2003 |
| | | | FI | 953276 A | 31-12-1996 |
| | | | JP | 10505477 T | 26-05-1998 |
| | | | NO | 970912 A | 25-04-1997 |
| | | | US | 6128486 A | 03-10-2000 |

EPO FORM P0459

For more details about this annex : see Official Journal of the European Patent Office, No. 12/82